(19) Europäisches Patentamt
European Patent Office
Office européen des brevets

(11) **EP 2 932 198 B1**

(12) **EUROPÄISCHE PATENTSCHRIFT**

(45) Veröffentlichungstag und Bekanntmachung des Hinweises auf die Patenterteilung:
**21.06.2017 Patentblatt 2017/25**

(21) Anmeldenummer: **13776811.5**

(22) Anmeldetag: **15.10.2013**

(51) Int Cl.:
*G01D 3/08* (2006.01)   *G01D 18/00* (2006.01)
*G01D 5/244* (2006.01)   *G01P 15/18* (2013.01)
*G01P 21/00* (2006.01)

(86) Internationale Anmeldenummer:
**PCT/EP2013/071494**

(87) Internationale Veröffentlichungsnummer:
**WO 2014/090445 (19.06.2014 Gazette 2014/25)**

(54) **REDUNDANTE SIGNALERFASSUNG**

REDUNDANT SIGNAL CAPTURE

ACQUISITION DE SIGNAUX REDONDANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2012   DE 102012222724**

(43) Veröffentlichungstag der Anmeldung:
**21.10.2015   Patentblatt 2015/43**

(73) Patentinhaber: **Robert Bosch GmbH**
**70442 Stuttgart (DE)**

(72) Erfinder:
• STEINLECHNER, Siegbert
  71229 Leonberg (DE)
• PLETINCKX, Jo
  74372 Sersheim (DE)
• SCHEUING, Jan
  74336 Brackenheim (DE)

(56) Entgegenhaltungen:
EP-A2- 0 523 732       WO-A1-98/19171
DE-A1- 19 739 903       US-A- 5 363 303

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 932 198 B1

**Beschreibung**

Die Erfindung betrifft einen Sensor zur Signalerfassung. Insbesondere betrifft die Erfindung einen redundanten Sensor und eine Technik zur Auswertung des Sensorsignals.

Stand der Technik

In sicherheitsrelevanten Systemen ist es von Bedeutung, ein fehlerhaftes Verhalten der zur Signalerfassung verwendeten Sensoren oder deren Signalpfade zeitnah zu erkennen. In einem Kraftfahrzeug betrifft dies beispielsweise einen Beschleunigungssensor, der zur Steuerung von Airbag- oder Fahrstabilitätssystemen verwendet werden.

Die üblicherweise genutzten Fehlererkennungsmechanismen im Sensor basieren im Wesentlichen auf dem Prinzip der Redundanz oder dem des Stimulus:

Bei einer redundanten Messung wird die Messgröße üblicherweise durch mindestens einen zusätzlichen Sensor erfasst, dessen erwartetes Signal sich durch eine nichttriviale Linearkombination aller übrigen Messsignale errechnen lässt, wobei die Erfassung und Auswertung dieses Signals möglichst unabhängig erfolgt. Dabei wird angenommen, dass die Sensoren näherungsweise linear und zeit-invariant sind. Ein fehlerhaftes Verhalten eines der verwendeten Sensoren wird dann anhand einer signifikanten Verletzung des linearen Zusammenhangs für gemessene Signale erkannt. Das Verfahren hat insbesondere bei offset-freien oder offset-korrigierten Signalen den Nachteil, dass sich beispielsweise Verstärkungsfehler in der Signalerfassung nur bei vorhandener Messgröße erkennen lassen. Bei einem Wert 0 der Messgröße ist aus dem linearen Zusammenhang der Redundanz kein Verstärkungsfehler erkennbar.

US 7 516 038 B2, WO98/19171 und US 5 363 303 zeigen Beispiele für eine redundante Auswertung von Signalen eines Beschleunigungssensors. Dabei kann ein Verstärkungsfehler eines in der horizontalen Ebene messenden Sensors bei waagerecht stehendem Fahrzeug nicht auf der Basis der Redundanz detektiert werden.

Beim Stimulus-Prinzip wird der vom Sensorelement gelieferten Messgröße ein bekanntes Stimulussignal überlagert, mit dessen Hilfe der Messkanal überprüft werden kann. Die Schwierigkeit liegt in der Unterscheidung der Wirkungen von Stimulus- und Nutzsignal auf das erfasste Signal, insbesondere wenn sich der Messkanal nicht ausreichend genau modellieren lässt und aufgrund dauerhafter Sensorempfindlichkeit keine zeitliche Trennung, sowie aufgrund der Messkanaleigenschaften keine Frequenztrennung möglich ist.

Ein Beispiel für eine zusätzliche Anregung eines Beschleunigungssensors durch ein elektrisches Stimulussignal ist in DE 10 2010 029903 A1 zu finden.

Die Erfindung hat die Aufgabe, einen Sensor für eine sicherheitskritische Anwendung auf Ausfall oder Fehlmessung eines Sensorelements sowie auf Fehler in einem Signalverarbeitungspfad zu überwachen. Diese Überwachung soll vorzugsweise während des laufenden Betriebs stattfinden, das Messergebnis nicht beeinflussen, auch ohne Anliegen einer Messgröße erfolgen können und eine Prüfung des Sensors im Frequenzbereich seines Nutzsignals ermöglichen. Die Erfindung löst diese Aufgabe mittels eines Sensors, eines Verfahrens und eines Computerprogrammprodukts mit den Merkmalen der unabhängigen Ansprüche.

Offenbarung der Erfindung

Ein erfindungsgemäßes Sensorsystem zur Bereitstellung eines N-dimensionalen Messsignals umfasst N Sensoren, die voneinander linear unabhängige Messrichtungen aufweisen, wenigstens einen zusätzlichen Sensor, dessen erwartetes Signal sich durch eine nicht-triviale Linearkombination aller übrigen Sensorsignale errechnen lässt, eine Stimulusquelle zur Bereitstellung eines periodischen Stimulussignals für jeden der Sensoren, wobei die Stimulussignale zueinander orthogonale Frequenzen aufweisen, und eine Verarbeitungseinrichtung zur Entfernung der Stimulussignale aus den Sensorsignalen und zur Bereitstellung des N-dimensionalen Messsignals, wie definiert im Anspruch 1. Die Erfindung nutzt eine redundante Sensoranordnung, bei der die einzelnen Messkanäle durch verschiedene, frequenzorthogonale Stimuli angeregt werden. Das heißt, dass die Stimulussignale so gewählt sind, dass sich ihre Spektren nicht überlappen. In einer weiteren Ausführungsform können auch Stimuli mit orthogonalen Codes verwendet werden.

Für Frequenzbereiche, die in keinem Stimulussignal enthalten sind, wird die Redundanz zur Plausibilisierung der gemessenen Signale, bzw. gegebenenfalls zusätzlich zur Rauschminderung der Messung genutzt. Ist eine Frequenz im Stimulussignal eines Messkanals enthalten, so wird der Messwert an dieser Frequenz unter Verwendung der Redundanz ohne den betroffenen Messkanal ermittelt.

Die Erfindung ist vorteilhaft gegenüber einer ausschließlich redundanten Messung, da die Messkanäle mittels Stimuli auch ohne Anliegen einer Messgröße überprüft werden können.

Ein wesentlicher Vorteil der Erfindung liegt darin, dass eine vollständige Trennung von Signal und Stimulus möglich ist, ohne den Frequenzgang des Messsignals einzuschränken. An die Stimulusfrequenzen wird lediglich eine Orthogonalitätsbedingung gestellt, sie können folglich auch im Nutzfrequenzbereich des Sensors liegen. Ein besonderer Vorteil der Erfindung ist, dass das zu messende Signal keine Verzögerung erfährt. Ein weiterer Vorteil liegt in der Möglichkeit einer aktiven Überprüfung der Wirksamkeit der Fehlerdetektionsmechanismen. Gemäß der Erfindung umfasst die Verarbeitungseinrichtung einen Mischer zum Mischen der Sensorsignale, einen Stimulusfilter für jeden Sensor, zum Ausfiltern des Stimulussignals aus dem Ausgangssignal des Mischers, einen Kompensator für jeden Sensor, der mit dem ihm zugeordneten Sensor und dem korrespondierenden Stimulusfilter verbunden ist, zum Kompensieren des Sensorsignals um das Stimulussignal, und einen Redundanzminderer zur Bereitstellung des Ausgangssignals auf der Basis der Signale der Kompensatoren.

Dadurch kann eine einfache und effiziente Bereitstellung des Ausgangssignals erzielt werden. Außerdem können die Sensoren auf der Basis von Zwischenergebnissen von Teilen der Verarbeitungseinrichtung überwacht werden. Die Erfindung kann durch ein Verfahren implementiert werden, welches Schritte des Stimulierens jedes Sensors mit einem periodischen Stimulationssignal mit einer vorbestimmten Stimulationsfrequenz, wobei die Stimulationsfrequenzen der Sensoren zueinander orthogonal sind, des Mischens der Sensorsignale, des Ausfilterns des Stimulationssignals jedes Sensors aus dem gemischten Sensorsignal, des Kompensierens jedes Sensorsignals und das ausgefilterte Stimulationssignal, des Minderns der Redundanz der kompensierten Sensorsignale und des Bereitstellens des Ausgangssignals umfasst. Entsprechende Verfahren können für die anderen beiden Ausführungsformen für die Verarbeitungseinrichtung angegeben werden.

Ein erfindungsgemäßes Computerprogrammprodukt umfasst Programmcodemittel zur Durchführung eines der Verfahren, wenn das Computerprogrammprodukt auf einer Verarbeitungseinrichtung abläuft oder auf einem computerlesbaren Datenträger gespeichert ist.

Die Erfindung wird nun mit Bezug auf die beigefügten Figuren genauer erläutert, wobei:

Figur 1 ein Blockschaltbild eines redundanten, stimulierbaren Sensorsystems;
Figur 2 ein Beispiel für zwei frequenz-orthogonale Stimulationssignale;
Figur 3 einen Signalfluss im Sensorsystem von Figur 1;
Figur 4 einen alternativen Signalfluss im Sensorsystem von Figur 1, der kein Teil der Erfindung bildet, und und
Figur 5 einen weiteren alternativen Signalfluss im Sensorsystem von Figur 1, der kein Teil der Erfindung bildet, darstellt.

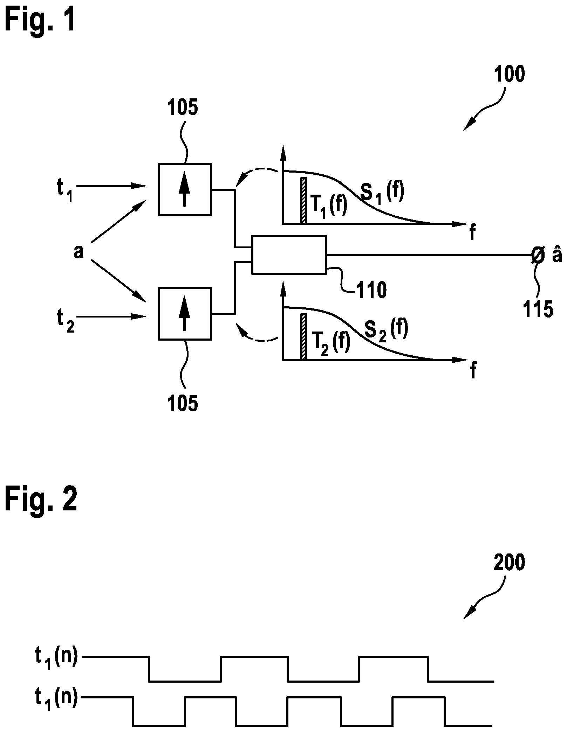

Figur 1 zeigt ein redundantes Sensorsystem 100 aus N mit $N \in \{2, 3, 4,...\}$ Sensoren 105, mit dessen Hilfe eine D-dimensionale (mit $D < N$), von außen auf den Sensor wirkende Messgröße a erfasst werden soll. Die Sensorsignale werden mittels einer Verarbeitungseinrichtung 110 verarbeitet und der Wert der Messgröße a wird am Ausgang 115 des Sensorsystems 100 in Form eines Messwerts â wiedergegeben. Dazu wird jeder Sensor mit einem periodischen Stimulussignal $t_i$ angeregt, wobei die Stimulussignale $t_i$ zueinander orthogonale Frequenzen aufweisen, wie unten noch genauer ausgeführt wird. An den Ausgängen der Sensoren 105 skizzierte Spektrogramme zeigen jeweils eine Verteilung von Intensitäten über die Frequenzen des Sensorsignals, wobei die Stimulussignale $t_i$ hervorgehoben sind.

Im Folgenden werden die Sensorsignale exemplarisch als zeitdiskretisiert betrachtet, und der Abtastzeitpunkt durch einen Index n wiedergegeben; dies dient jedoch nur der Erläuterung und stellt keine Einschränkung an die vorgestellte Technik dar. Ferner wird angenommen, dass jeder Sensor 105 über einen ausreichend großen Dynamikbereich verfügt und sich näherungsweise linear und zeitinvariant verhält.

Die zu messenden Sensorsignale $s_i$ *(mit 1 ⊴≤N)* eines redundanten Sensorsystems ohne Stimulus lassen sich als

$$\begin{pmatrix} s_1 \\ \vdots \\ s_N \end{pmatrix} = M \cdot a \qquad\qquad\qquad \text{(Gleichung 1)}$$

beschreiben, wobei die Sensoranordnung durch eine Systemmatrix M wiedergegeben wird. Der Fall eines trivialen Sensors, bei dem eine Zeile der Matrix M ausschließlich den Wert 0 enthält, sei ausgeschlossen. Im Sonderfall einer Dimension D=1 der Messgröße stellt M einen Vektor dar. Die Matrix *M* beschreibt, mit welchen Faktoren die Komponenten der Messgröße a auf die einzelnen Sensoren wirken. Die Matrix *M* ist im Wesentlichen durch die geometrische Anordnung bestimmt. Gemessen wird das durch die Sensorübertragungsfunktion $g_i$ verfälschte Signal

$$\hat{s}_i = g_i(s_i),$$ (Gleichung 2)

mit beispielsweise $g_i(x) = \alpha_i \cdot x + \beta_i$.

Wird der Messwert $\hat{a}$ beispielsweise durch ein Kleinste-Quadrate-Verfahren aus den Sensorsignalen ermittelt, so wird zur Schätzung des Messwerts die Pseudoinverse $M^+$ der Matrix M verwendet:

$$\hat{a} = M^+ \cdot \begin{pmatrix} \hat{s}_1 \\ \vdots \\ \hat{s}_N \end{pmatrix}, \text{ mit } M^+ = (M^T M)^{-1} M^T$$ (Gleichung 3)

Anhand eines Fehlerterms e, der die lineare Abhängigkeit unter den redundant erfassten Sensorsignalen in Form von geometrieabhängigen Gewichtsfaktoren $k_i$ wiedergibt, kann die Messung plausibilisiert werden:

$$e = \sum_{i=1}^{N} k_i \cdot \hat{s}_i \overset{!}{=} 0$$ (Gleichung 4)

bzw. $|e| < \delta$ unter Berücksichtigung von Rauschen bei einer Akzeptanzschwelle $\delta > 0$. Allgemein sind bis zu N - D unterschiedliche lineare Abhängigkeiten möglich, folglich können auch mehrere Fehlerterme überprüft werden.

Im Fall des Kleinste-Quadrate-Verfahrens ist e durch

$$\begin{pmatrix} \vdots \\ e \\ \vdots \end{pmatrix} = \begin{pmatrix} \hat{s}_1 \\ \vdots \\ \hat{s}_N \end{pmatrix} - MM^+ \begin{pmatrix} \hat{s}_1 \\ \vdots \\ \hat{s}_N \end{pmatrix}$$ (Gleichung 5)

gegeben.

Die Sensoren werden mit periodischen Signalen stimuliert, so dass den Sensorsignalen $s_i$ jeweils ein periodisches Stimulussignal ti überlagert ist:

$$\begin{pmatrix} \tilde{s}_1 \\ \vdots \\ \tilde{s}_N \end{pmatrix} = M \cdot a + \begin{pmatrix} t_1 \\ \vdots \\ t_N \end{pmatrix}$$ (Gleichung 6)

Figur 2 zeigt exemplarische Stimulussignale $t_i$ für das Sensorsystem 100 aus Figur 1. Die Stimulussignale $t_i$ sind jeweils so gewählt, dass sie im Nutzfrequenzbereich des Sensors 105 liegen und sich die Spektren der Stimulus-signale $t_i$ gegenseitig nicht überlappen. Anders ausgedrückt bestehen keine gemeinsamen Frequenzlinien, die Frequenzen sind also zueinander orthogonal. Im Hinblick auf den Realisierungsaufwand sowohl bei Signalerzeugung als auch bei Signalfilterung ist es bevorzugt, dass die Stimulussignale $t_i$ rechteckförmig, symmetrisch und mittelwertfreie Signale sind, beispielsweise mit identischer Amplitude $v$ in der Größenordnung von 5 bis 10 Prozent des Dynamikbereichs

$$t_i(n) = \begin{cases} +v, & n \in \left[0, \dfrac{f_A}{2f_i}\right[ \\[2ex] -v, & n \in \left[\dfrac{f_A}{2f_i}, \dfrac{f_A}{f_i}\right[ \end{cases} \qquad \text{(Gleichung 7)}$$

wobei $f_A$ die Abtastfrequenz und $f_i$ die zugehörige Rechteckfrequenz bezeichnet und $\dfrac{f_A}{2f_i}$ vorzugsweise ganzzahlig gewählt wird. Die Phasenlage der Rechtecksignale zu-einander spielt keine Rolle. Die Frequenzorthogonalität wird dann dadurch erreicht, dass keine ungeradzahligen Vielfachen der Rechteckfrequenzen zusammenfallen; hierzu werden vorzugsweise folgende Frequenzverhältnisse gewählt:

$N=2: f_1 : f_2 = 2 : 3$
oder $f_1 : f_2 = 2 : 4$
oder $f_1 : f_2 = 3 : 4$
$N=3: f_1 : f_2 : f_3 = 2 : 3 : 4$
oder $f_1 : f_2 : f_3 = 3 : 4 : 6$
oder $f_1 : f_2 : f_3 = 4 : 5 : 6$
$N = 4: f_1 : f_2 : f_3 : f_4 = 4: 6: 7: 8$

Zum Beispiel können für $N = 3$ bei einer Abtastfrequenz $f_A = 600$ Hz die Rechteckfrequenzen $f_1 = 150$ Hz, $f_2 = 100$ Hz und $f_3 = 75$ Hz gewählt werden.

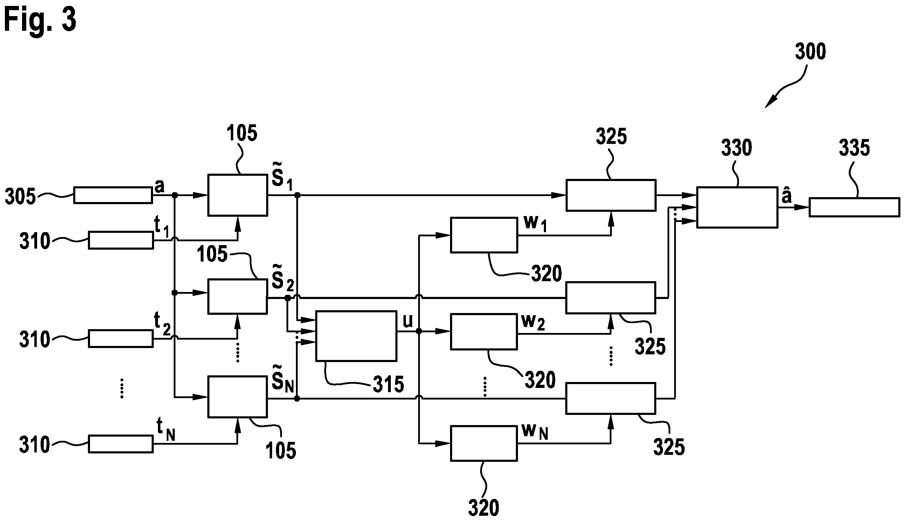

Figur 3 zeigt einen Signalfluss im Sensorsystem 100 aus Figur 1. Eine externe Signalquelle 305 stellt die Messgröße a bereit und Stimulusquellen 310 Stimulussignale $t_i$. Auf jeden Sensor 105 wirkt die Messgröße a und eines der Stimulussignale $t$. Um die Stimulusanteile aus den Sensorsignalen zu entfernen, werden die Sensorsignale $\tilde{s}_i$ mittels eines Mischers 315 analog Gleichung (4) zu einem Signal $u(n)$ kombiniert:

$$u(n) = \sum_{i=1}^{N} k_i \cdot \tilde{s}_i(n) \qquad \text{(Gleichung 8)}$$

Im rauschfreien Fall und bei fehlerfreien Sensoren ($\alpha_i=1$, $\beta_i=0$) enthält dieses Kombinationssignal $u(n)$ ausschließlich die mit $k_i$ gewichteten *Stimulussignale* $t_i$:

$$u(n)\big|_{\alpha_i=1,\,\beta_i=0} = \underbrace{\sum_{i=1}^{N} k_i \cdot s_i(n)}_{0} + \sum_{i=1}^{N} k_i \cdot t_i(n) \qquad \text{(Gleichung 9)}$$

Das Kombinationssignal $u(n)$ wird an eine Reihe von N Stimulusfiltern 320 geleitet, die Durchlassfilter für die jeweils passenden Stimulusfrequenzen eines Kanals sind, wobei vorzugsweise die Filterlänge so gewählt ist, dass sie der gemeinsamen Periodenlänge der Stimulussequenzen entspricht. Die Stimulusfilter 320 sind vorzugsweise als digitale Filterbank mit FIR-Filtern (FIR: "Finite Impulse Response", Filter mit endlicher Impulsantwort) realisiert. Die Verstärkung eines Stimulusfilters 320 sei mit $l_i$ bezeichnet.

Der Ausgang jedes Stimulusfilters 320 und ein Ausgang des korrespondierenden Sensors 105 sind an einen Kompensator 325 geführt, der durch Addition des jeweiligen Sensorsignals $\tilde{s}_i(n)$ und dem mit $-\dfrac{1}{k_i \cdot l_i}$ gewichteten, passenden Filterausgangssig-nal $w_i(n)$ in jedem Kanal den Stimulusanteil $t_i(n)$ vollständig kompensiert, da $w_i(n)$ eine zeitverzögerte, ggf. über mehrere Stimulusperioden gemittelte Variante *von* $k_i\, t_i(n)$ darstellt.

Auf der Basis der um die Stimuli kompensierten Sensorsignale wird in einem Redundanzminderer 330 der Messwert â analog Gleichung (2) geschätzt und am Ausgang 335 ausgegeben.

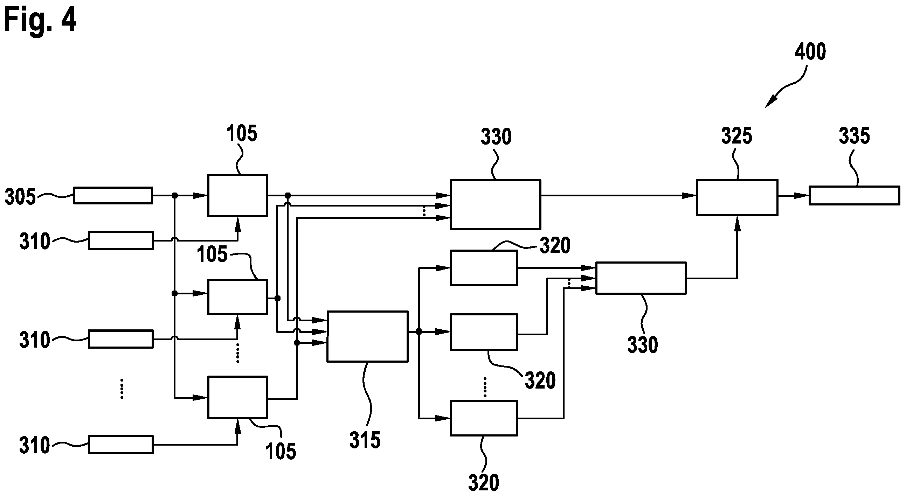

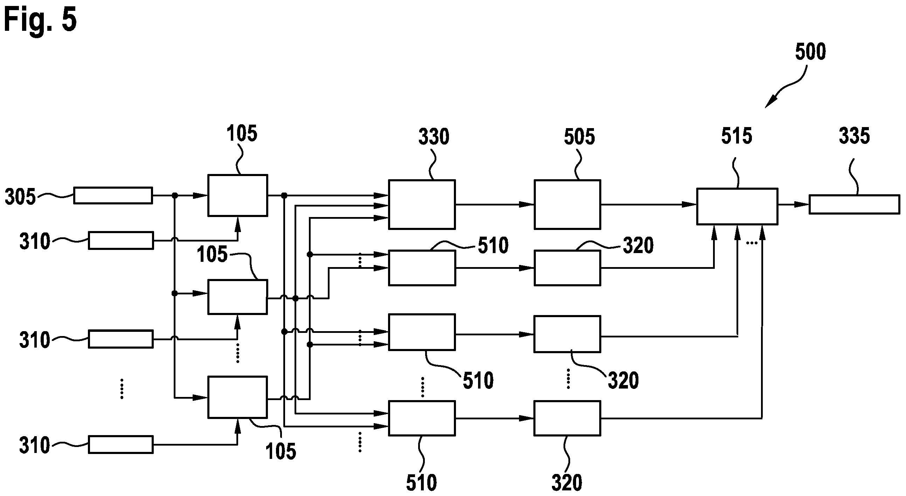

Die Abbildungen 4 und 5 zeigen beispielhaft äquivalente Strukturen, die kein Teil der Erfindung bilden, die durch Vertauschen der Reihenfolge von linearen Operationen aus der Struktur in Figur 3 hervorgehen.

Figur 4 zeigt einen alternativen Signalfluss im Sensorsystem 100 von Figur 1. Im Unterschied zu der in Figur 3 dargestellten Ausführungsform werden hier die Ausgänge der Stimulusfilter 320 nicht an Kompensatoren 325 sondern an den Redundanzminderer 330 geführt. Außerdem werden die Ausgangssignale der Sensoren 105 einem weiteren Redundanzminderer 330 bereit gestellt. Die Ausgangssignale der beiden Redundanzminderer 330 werden an einen Kompensator 325 geführt, der das Ausgangssignal bereit stellt.

Figur 4 zeigt noch einen alternativen Signalfluss im Sensorsystem 100 von Figur 1. Dieses Beispiel unterscheidet sich von der in Figur 3 Gezeigten dadurch, dass die Sensorsignale aller Sensoren 105 an einen Redundanzminderer 330 geleitet werden, dessen Ausgang mit einem Stimulus-Sperrfilter 505 verbunden ist. Ferner ist für jeden der Sensoren 105 ein partieller Kombinierer 510 bereit gestellt. Jeder partielle Kombinierer 510 ist mit den Sensorsignalen zweier Sensoren 105 verbunden, wobei jeder Kombinierer eine andere Kombination von Sensorsignalen auswertet. Der Ausgang jedes Kombinierers 510 ist mit einem dedizierten Stimulusfilter 320 verbunden und die Ausgänge der Stimulusfilter 320 sowie der Ausgang des Stimulus-Sperrfilters 505 sind an einen Signal-Rekonstruierer 515 geführt, der das Signal am Ausgang 335 bereitstellt.

Durch die erfindungsgemäße Kombination von Redundanz und Stimulus werden mehrere Überwachungsfunktionen ermöglicht:

- Die Ausgangssignale der Stimulusfilter $w_i(n)$ können für eine (um die Filterlaufzeit zeitversetzte) Bestimmung der Sensorverstärkung $\alpha_i$, beispielsweise an der Stimulusfrequenz oder durch Gleichanteilsschätzung, genutzt werden.
- Alternativ zur Gleichanteilsschätzung gibt ein anhaltendes Fehlen eines Ausgangssignals $w_i(n)$ des Stimulusfilters (oder ein langsames Abklingen dessen Amplitude) Hinweis auf einen Defekt in der Erzeugung des Stimulus oder im Sensorelement bzw. der nachfolgenden Auswerteschaltung.
- Durch Subtraktion aller Filterausgangssignale kann aus dem Kombinationssignal $u(n)$ ein ebenfalls laufzeitfreies Fehlersignal

$$\widetilde{e}(n) = u(n) - \sum_{i=1}^{N} w_i(n) \qquad \text{(Gleichung 10)}$$

erzeugt werden, welches abgesehen von den Stimulusfrequenzen dem Fehlersignal nach Gleichung (4) entspricht. Dieses kann bei anliegender Messgröße zusätzlich zur Plausibilisierung verwendet werden, indem die lineare Abhängigkeit der Redundanz geprüft wird, beispielsweise durch einen Schwellwertvergleich

$$\left|\widetilde{e}(n)\right| < \delta\,. \qquad \text{(Gleichung 11)}$$

- Aufgrund der speichernden Eigenschaft der Filter werden Defekte, die zu einer schnellen Änderung der Sensorübertragungsfunktion $g(x)$ (innerhalb der Filterlaufzeit) führen, in $\widetilde{e}(n)$ sichtbar - zusätzlich zur Überwachung der Sensorverstärkung und auch ohne anliegende Messgröße.
- Durch gewichtete Aufsummierung des Kombinationssignals $u(n)$ ist bereits vor der Filterung eine Bestimmung bzw. Überwachung der Sensorverstärkung möglich; hierfür ist nicht die gesamte Filterlaufzeit, sondern nur die gemeinsame Periodendauer von Stimuli der übrigen Kanäle ausschlaggebend.
- Eine von $k_i$ abweichende, beispielsweise adaptiv nachgeführte Gewichtung der Signalanteile ist ebenfalls möglich, ggf. auch in einem parallelen Überwachungspfad, der keine Auswirkung auf den Messwertpfad hat.

**Patentansprüche**

1. Sensorsystem (100) zur Bereitstellung eines N-dimensionalen Messsignals, folgende Elemente umfassend:

   - N Sensoren (105), die voneinander linear unabhängige Messrichtungen aufweisen;
   - wenigstens einen zusätzlichen Sensor (105), dessen erwartetes Signal sich durch eine nicht-triviale Linearkombination aller übrigen Sensorsignale errechnen lässt;
   - eine Stimulusquelle (310) zur Bereitstellung eines periodischen Stimulussignals für jeden der Sensoren (105), wobei die Stimulussignale zueinander orthogonale Frequenzen aufweisen, und

- eine Verarbeitungseinrichtung (110) zur Entfernung der Stimulussignale aus den Sensorsignalen und zur Bereitstellung des N-dimensionalen Messsignals,

wobei die Verarbeitungseinrichtung (110) folgendes umfasst:

- einen Mischer (315) zum Mischen der Sensorsignale;
- einen Stimulusfilter (320) für jeden Sensor (105), zum Ausfiltern des Stimulussignals aus dem Ausgangssignal des Mischers (315);
- einen Kompensator (325) für jeden Sensor (105), der mit dem ihm zugeordneten Sensor (105) und dem korrespondierenden Stimulusfilter (320) verbunden ist, zum Kompensieren des Sensorsignals um das Stimulussignal, und
- einen Redundanzminderer (330) zur Bereitstellung des Ausgangssignals auf der Basis der Signale der Kompensatoren (325).

2. Verfahren zum Bestimmen eines N-dimensionalen Messsignals auf der Basis von wenigstens N voneinander linear unabhängigen Sensorsignalen und eines zusätzlichen Sensorsignals, das sich erwartungsgemäß durch eine nicht-triviale Linearkombination aller übrigen Sensorsignale errechnen lässt, folgende Schritte umfassend:

- Stimulieren jedes Sensors (105) mit einem periodischen Stimulationssignal mit einer vorbestimmten Stimulationsfrequenz, wobei die Stimulationsfrequenzen der Sensoren zueinander orthogonal sind;
- Mischen der Sensorsignale;
- Ausfiltern des Stimulationssignals jedes Sensors aus dem gemischten Sensorsignal;
- Kompensieren jedes Sensorsignals um das ausgefilterte Stimulationssignal;
- Mindern der Redundanz der kompensierten Sensorsignale, und
- Bereitstellen des Ausgangssignals.

3. Verfahren nach Anspruch 2, ferner umfassend ein Bestimmen eines Defekts bei der Erzeugung des Stimulussignals, im Sensor (105) oder einer Verarbeitungseinrichtung (110) zur Bestimmung des Ausgangssignals auf der Basis der Sensorsignale, falls ein Stimulusfilter (320) zum Ausfiltern des Stimulationssignals jedes Sensors (105) aus dem gemischten Sensorsignal länger als eine vorbestimmte Zeit kein Ausgangssignal mit einer vorbestimmten Amplitude bereit stellt.

4. Computerprogrammprodukt mit Programmcodemitteln zur Durchführung des Verfahrens nach einem der Ansprüche 2 oder 3, wenn das Computerprogrammprodukt auf einer Verarbeitungseinrichtung (110) abläuft oder auf einem computerlesbaren Datenträger gespeichert ist.

**Claims**

1. Sensor system (100) for providing an N-dimensional measurement signal, comprising the following elements:

- N sensors (105) having measuring directions which are linearly independent of one another;
- at least one additional sensor (105), the expected signal from which can be calculated by means of a non-trivial linear combination of all other sensor signals;
- a stimulus source (310) for providing a periodic stimulus signal for each of the sensors (105), the stimulus signals having frequencies which are orthogonal to one another, and
- a processing device (110) for removing the stimulus signals from the sensor signals and for providing the N-dimensional measurement signal,

the processing device (110) comprising the following:

- a mixer (315) for mixing the sensor signals;
- a stimulus filter (320) for each sensor (105) for filtering the stimulus signal from the output signal from the mixer (315);
- a compensator (325) for each sensor (105), which compensator is connected to the sensor (105) assigned to it and to the corresponding stimulus filter (320) and is intended to compensate the sensor signal for the stimulus signal, and
- a redundancy reducer (330) for providing the output signal on the basis of the signals from the compensators (325).

2. Method for determining an N-dimensional measurement signal on the basis of at least N sensor signals linearly independent of one another and an additional sensor signal which can be calculated, as expected, by means of a non-trivial linear combination of all other sensor signals, comprising the following steps of:

- stimulating each sensor (105) with a periodic stimulation signal at a predetermined stimulation frequency, the stimulation frequencies of the sensors being orthogonal to one another;
- mixing the sensor signals;
- filtering the stimulation signal of each sensor from the mixed sensor signal;
- compensating each sensor signal for the stimulation signal which has been filtered out;
- reducing the redundancy of the compensated sensor signals, and
- providing the output signal.

3. Method according to Claim 2, also comprising determining a defect during the generation of the stimulus signal in the sensor (105) or a processing device (110) for determining the output signal on the basis of the sensor signals if a stimulus filter (320) for filtering the stimulus signal of each sensor (105) from the mixed sensor signal does not provide an output signal with a predetermined amplitude for longer than a predetermined time.

4. Computer program product having program code means for carrying out the method according to either of Claims 2 and 3 when the computer program product runs on a processing device (110) or is stored on a computer-readable data storage medium.


**Revendications**

1. Système de capteur (100) destiné à fournir un signal de mesure à N dimensions, comprenant les éléments suivants :

- N capteurs (105) qui présentent des directions de mesure linéairement indépendantes les unes des autres ;
- au moins un capteur supplémentaire (105) dont le signal attendu peut être calculé par une combinaison linéaire non triviale de tous les autres signaux de capteurs ;
- une source de stimulus (310) destinée à fournir un signal de stimulus périodique pour chacun des capteurs (105), dans lequel les signaux de stimulus présentent des fréquences orthogonales les unes aux autres, et
- un dispositif de traitement (110) destiné à éliminer les signaux de stimulus des signaux de capteur et à fournir le signal de mesure à N dimensions,

dans lequel le dispositif de traitement (110) comprend les éléments suivantes :

- un mélangeur (315) destiné à mélanger des signaux de capteur ;
- un filtre de stimulus (320) pour chaque capteur (105), destiné à séparer par filtrage le signal de stimulus du signal de sortie du mélangeur (315) ;
- un compensateur (325) pour chaque capteur (105), qui est relié au capteur qui lui est associé (105) et au filtre de stimulus (320) correspondant afin de compenser le signal de capteur avec le signal de stimulus, et
- un réducteur de redondance (330) destiné à fournir le signal de sortie sur la base des signaux des compensateurs (325).

2. Procédé de détermination d'un signal de mesure à N dimensions sur la base d'au moins N signaux de capteurs linéairement indépendants les uns des autres et d'un signal de capteur supplémentaire qui peut être calculé de façon attendue par une combinaison linéaire non triviale de tous les autres signaux de capteurs, comprenant les étapes consistant à :

- stimuler chaque capteur (105) avec un signal de stimulation périodique ayant une fréquence de stimulation prédéterminée, dans lequel les fréquences de stimulation des capteurs sont orthogonales les unes des autres ;
- mélanger les signaux de capteurs ;
- séparer par filtrage le signal de stimulation de chaque capteur du signal de capteur mélangé ;
- compenser chaque signal de capteur avec le signal de stimulation séparé par filtrage ;
- réduire la redondance des signaux de capteur compensés, et
- fournir le signal de sortie.

**3.** Procédé selon la revendication 2, comprenant en outre une détermination d'un défaut lorsque le signal de stimulation est généré, dans le capteur (105) ou un dispositif de traitement (110) destiné à déterminer le signal de sortie sur la base des signaux de capteurs, dans le cas où un filtre de stimulus (320) destiné à séparer par filtrage le signal de stimulation de chaque capteur (105) du signal de capteur mélangé ne fournit aucun signal de sortie ayant une amplitude prédéterminée plus longtemps qu'un temps prédéterminé.

**4.** Produit de programme d'ordinateur comportant des moyens à code de programme destinés à mettre en oeuvre le procédé selon l'une quelconque des revendications 2 ou 3, lorsque le produit de programme d'ordinateur est exécuté sur un dispositif de traitement (110) ou est stocké sur un support de données lisible par ordinateur.

**Fig. 1**

**Fig. 2**

# Fig. 3

**Fig. 4**

EP 2 932 198 B1

# Fig. 5

EP 2 932 198 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7516038 B2
- WO 9819171 A
- US 5363303 A
- DE 102010029903 A1